# EUROPÄISCHE PATENTSCHRIFT

(11) **EP 1 774 616 B1**
(45) Veröffentlichungstag und Bekanntmachung des Hinweises auf die Patenterteilung: **08.09.2010**
(21) Anmeldenummer: 05777847.4
(22) Anmeldetag: 07.07.2005
(51) Int. Cl.: H01P 5/08

(54) **VORRICHTUNG ZUR ÜBERTRAGUNG VON BREITBANDIGEN HOCHFREQUENZSIGNALEN**
DEVICE FOR TRANSMITTING BROADBAND HIGH-FREQUENCY SIGNALS
DISPOSITIF DE TRANSMISSION DE SIGNAUX HAUTE FREQUENCE À LARGE BANDE

(30) Priorität: 06.08.2004 DE 102004038574
(43) Veröffentlichungstag der Anmeldung: 18.04.2007
(73) Patentinhaber: Endress + Hauser GmbH + Co. KG, 79689 Maulburg (DE)
(72) Erfinder: CHEN, Qi, 79689 Maulburg (DE); MICHALSKI, Bernhard, 79689 Maulburg (DE)
(74) Vertreter: Andres, Angelika Maria
(86) Internationale Anmeldenummer: PCT/EP2005/053254
(87) Internationale Veröffentlichungsnummer: WO 2006/015920

(56) Entgegenhaltungen:
- EP-A1- 0 882 955
- DE-A1- 3 228 993
- US-A- 4 680 557
- US-A1- 2002 084 514
- SACHSE K ET AL: "Novel, multilayer coupled-line structures and their circuit applications" MICROWAVES, RADAR AND WIRELESS COMMUNICATIONS. 2000. MIKON-2000. 13TH INTERNATIONAL CONFERENCE ON MAY 22-24, 2000, PISCATAWAY, NJ, USA,IEEE, Bd. 3, 22. Mai 2000 (2000-05-22), Seiten 131-155, XP010537480 ISBN: 83-906662-3-5

## Beschreibung

Die Erfindung betrifft eine Vorrichtung zur Übertragung von breitbandigen Hochfrequenzsignalen einer Mittenwellenlänge mit einer Leiterstruktur, die zumindest einen Signalpfad und zwei symmetrisch zum Signalpfad angeordnete Bezugspfade, die zusammen eine Koplanarleitung bilden, aufweist, wobei die Leiterstruktur auf zwei gegenüberliegenden Seiten von zumindest einer dielektrischen Substratlage der einer vorgegebenen Dicke derart angeordnet ist, dass die Leiterstruktur eine galvanische Trennung ausbildet, die in vorgegebenen Koppelbreichen überlappt, wodurch die Koppelbereiche der Leiterstruktur die Hochfrequenz-signale durch eine elektromagnetische Kopplung übertragen.

Derartige galvanische Trennungen sind beispielsweise in Messgeräten der Prozessmesstechnik zu finden. Diese Messgeräte werden häufig in der Automations- und Prozesssteuerungstechnik eingesetzt, um eine Prozessvariable wie z.B. Durchfluss, Füllstand, Druck und Temperatur oder eine andersartige physikalische und/oder chemische Prozessgröße in einem Prozessablauf zu ermitteln. Von der Anmelderin werden beispielsweise Messgeräte unter dem Namen Micropilot produziert und vertrieben, welche nach dem Laufzeit-Messverfahren arbeiten und dazu dienen, einen Füllstand eines Mediums in einem Behälter zu bestimmen und/oder zu überwachen. Bei der Laufzeit-Messmethode werden beispielsweise Mikrowellen bzw. Radarwellen oder Ultraschallwellen über eine Antenne ausgesendet, und die an der Mediumsoberfläche reflektierten Echowellen werden nach der abstandsabhängigen Laufzeit des Signals wieder empfangen. Aus der Laufzeit lässt sich dann der Füllstand des Mediums in einem Behälter berechnen. Ein weiteres Messprinzip aus einer Vielzahl von Messmethoden den Füllstand in einem Behälter zu ermitteln, ist das der geführten Mikrowelle bzw. die TDR-Messmethode (Time Domain Reflection). Bei der TDR-Messmethode wird z.B. ein Hochfrequenzimpuls entlang eines Sommerfeldschen Oberflächenwellenleiters oder Koaxialwellenleiters ausgesendet, welches bei einem Sprung des DK-Wertes (Dielektrizitätskonstanten) des den Oberflächenwellenleiter umgebenden Mediums teilweise zurückreflektiert wird. Aus der Zeitdifferenz zwischen dem Aussenden des Hochfrequenzimpulses und dem Empfang des reflektierten Echosignals lässt sich der Füllstand ermittelten. Das so genannte FMCW-Verfahren (Frequency Modulated Continuous Waves) ist in dem Zusammenhang mit den obigen Messprinzipien ebenfalls ausführbar.

Diese gattungsgemäße Vorrichtung wird dazu eingesetzt, eine galvanische Trennung zwischen dem geerdeten Prozessraum und dem Messgerät zu gewährleisten. Die galvanische Trennung ist in der Prozessmesstechnik notwendig, da der Prozessraum oder die mit dem Prozess in Berührung stehenden Elemente aufgrund der Anforderungen des Explosionsschutzes auf Erdpotential gelegt werden müssen. Die Bezugsmassen der Messgeräte weichen jedoch meist von dem Erdpotential ab. Die Differenz der beiden Potentiale resultiert in einer Spannung, die zwischen den geerdeten Prozesselementen und dem Messgerät anliegt, wodurch ein Strom verursacht wird. Dieser Strom hat den Nachteil, dass die Leitungen der Bezugsmasse durch den Stromfluss stark beansprucht werden. Dies hat den Effekt, dass sich die Masseleitung stark erwärmt, so dass die Zündschutzart "Eigensicherheit" des Messgerätes nicht mehr gewährleistet werden kann.

Bei käuflichen Messgeräten wird die Trennung des Stromkreises meist im Eingangsbereich des Meßgerätes durchgeführt, d.h. die Stromzuleitungen und die Signalleitungen werden galvanisch getrennt. Die galvanische Trennung der Stromzuleitungen wird bei einem anliegenden Wechselstrom meist über eine induktive Kopplung mittels eines Transformators oder über eine kapazitive Kopplung mittels Kondensatoren durchgeführt. Bei einer Gleichstrom-Versorgung des Messgerätes trennt ein Gleichstrom-Wandler die Versorgungsleitungen des Messgerätes, oder der über die Leitungen fließende Strom wird über zusätzliche Bauteile begrenzt. Die signaltechnische, galvanische Trennung der Datenleitung wird meist über einen Optokoppler durchgeführt. Zusammengenommen hat diese Ausführungsform des Explosionsschutzes im Eingangsmodul des Messgerätes den Nachteil, dass für die galvanische Trennung der im Prozessraum befindlichen Elemente von den Gerätschaften der Peripherie eine Vielzahl von teuren und störanfälligen Bauteilen notwendig ist.

Deshalb wird im Bereich der Hochfrequenztechnik schon seit längerem versucht, eine galvanische Trennung hochfrequenzseitig zu integrieren, da hier meist nur die Signalleitung und Referenzleitung galvanisch getrennt werden müssen, was mittels der kostengünstigen, planaren Wellenleitungstechnik ausgeführt werden kann.

In der WO 03/063190 A2 wird eine einfache galvanische Trennung über eine HF-Steckverbindung beschrieben, um der Zündschutzart Eigensicher gerecht zu werden. Das Koaxialsteckersystem besteht aus einer Buchse und einem Stecker mit einer Trennschicht als galvanische Trennung. Der Stecker kann auch durch ein Semirigid-Kabels ersetzt werden. Diese Umsetzung der Anforderungen der Zündschutzart "Eigensicherheit" hat den Nachteil, dass die Herstellung der galvanisch getrennten Steckverbindung sich sehr schwierig gestaltet und teuer ist. Des Weiteren werden die Signale in diesen Übergängen der Steckverbindung durch die Geometriesprünge der Leitungsstrukturen im Stecksystem stark zurückreflektiert bzw. gedämpft. Für hohe Frequenzen, beispielsweise über 20 GHz, ist die galvanische Trennung des Innenleiters aus Gründen der Geometrie der Steckverbindung nicht mehr durch eine einfachen Kopplung über Koppelbereiche der Steckverbindung realisierbar, wodurch der Innenleiter durch ein weiteres Bauteil, insbesondere einen Kondensator, galvanisch getrennt werden muss.

In der DE 199 58 560 A1 eine Ausführungsform der galvanischen Trennung von Hochfrequenzsignalen durch die Verwendung einer Schlitzleitung aufgezeigt. In dieser Schrift werden zwei Schlitzleitungen parallel übereinander angebracht, so dass die von der einen Schlitzleitung ausgesendete elektromagnetische Strahlung in die andere Schlitzleitung eingekoppelt wird. Dadurch ist eine galvanisch trennende Verbindung zwischen den beiden Schlitzleitungen entstanden. Die Adaption der Schlitzleitungen durch eine Trennschicht hindurch wird über eine Mikrostreifenleitung realisiert.

Nachteilig bei dieser Ausführungsform ist der komplizierte, vielschichtige Aufbau der Kopplungsstruktur, der mehrere Herstellungsprozessschritte in Anspruch nimmt. Außerdem weist die Schlitzleitung und Mikrostneifenleitung gegenüber der Koplanarleitung eine viel größere Dispersion, d.h. eine viel größere Abhängigkeit der Ausbreitungsgeschwindigkeit der elektromagnetischen Wellen von der Wellenlänge bzw. von der Frequenz in einem Medium, auf.

In der EP 0882 955 A1 sind mehre Arten der galvanischen Trennung von einer Koplanar-Leiterbahn aufgeführt. Bei der Koplanar-Leltungstechnik sind drei separate planare Wellenleiter nebeneinander auf einem Substrat angebracht, wobei der mittlere, planare Wellenleiter das Signal führt und wobei die zwei weiteren planaren Wellenleiter, die die Schirmleitung bilden, den mittleren säumen. Zur galvanischen Trennung der planaren Wellenleiter sind in dieser Schrift mehrere Möglichkeiten offenbart:
- Die planaren Wellenleiter werden aufgetrennt, und ein Kondensator wird in die Trennstelle eingebracht.
- Die Leitungen werden wiederum einfach aufgetrennt, wobei ein Leitungsteil auf der gegenüberliegenden Seite des Substrates angebracht wird und sich Teilbereiche der Leitungen räumlich überlappen. Über diese überlappenden Teilbereiche wird das Signal kapazitiv gekoppelt

In der DE 32 28 993 A1 werden Filterstrukturen, wie z.B. Interdlgitalfilter. Kammfilter und Richtkoppler, für Hochfrequenzsignale aus Mikrostreifenleitem gezeigt. Diese Anordnung der Mikrostreifenleitung weisen eine erhöhte Dispersion für Hochfrequenzsignale auf, so dass die Ausbreitungsgeschwindigkeit und somit auch die Dämpfung der Hochfrequenzsignale bei anderen Frequenzen unterschiedlich ist.

In der US 2002/ 084514 A1 wird eine Durchkontaktierung von Streifenleitungen durch das Substrat hindurch gezeigt.

Aufgabe der Erfindung ist es, eine galvanische Trennung zu ermöglichen, die gute Übertragungseigenschaften bei Frequenzen größer als 6 GHz aufweist.

Diese Aufgabe wird nach einer Ausgestaltung der Erfindung dadurch gelöst, dass die Dicke der Substratlage kleiner ist als λₘ/4, und dass mehrere elektromagnetische Kopplungen seriell hintereinander angeordnet sind. Für die erfindungsgemäße potentialfrei Übertragung von Hochfrequenzsignalen eines Frequenzbereiches größer als 6 GHz ist ein Abstand von kleiner λₘ/4 der eingespeisten Mittenwellenlänge λₘ des Hochfrequenzsignals notwendig, um eine optimale Übertragung des eingespeisten Signals in den planaren Wellenleiter bzw. symmetrischen Koplanarwellenleiter zu gewährleisten. Wird hingegen ein größerer Abstand der Koppelbereiche, als oben beschrieben, gewählt, so ist die Güte der elektromagnetischen Kopplung des Hochfrequenzsignals sehr gering und es kommt zu starken Verlusten bei der nicht angepassten elektromagnetischen Kopplung des Hochfrequenzsignals.

Da dieser Abstand von kleiner als λₘ/4 bei hohen Frequenzen für eine Explosionsschutzverordnung "Zündschutzart Eigensicherheit" (EN 50020), die einen Mindestabstand von 1 mm vorschreibt, nicht ausreicht, wird erfindungsgemäß die galvanische Trennung bzw. die elektromagnetische Kopplung bei Abständen kleiner 1 mm mehrfach ausgeführt. Hierdurch lässt sich erreichen, dass der Norm trotz unterschreiten des Mindestabstandes wiederum gewahrt wird. Die Vorteile der erfindungsgemäßen Anordnung lassen sich zusammenfassend wie folgt beschreiben, dass die Vorrichtung unempfindlich gegenüber äußeren Störeinflüssen ist, außerdem kostengünstig herzustellen ist und den Normen der Zündschutzart Eigensicherheit von Geräten genügt.

In einer besonders bevorzugten Ausführungsform der Erfindung ist vorgesehen, dass die Leiterstruktur mehrere Teilstücke aufweist, welche auf den beiden Seiten der Substratlage alternierend angebracht sind. Die koplanare Leitungsstruktur wird in einzelne Teilstücke aufgeteilt, die auf den beiden Seiten in der Art und Weise so angebracht sind, dass sich die Koppelbereiche der Teilstücke der Leiterstruktur durch die Substratlage räumlich getrennt überlappen. Durch die räumliche Überlappung der Koppelbereiche entsteht so eine für die Hochfrequenzsignale elektromagnetische Kopplung von einem Teilstück auf der einen Seite des HF-Substrats auf das Teilstück auf der gegenüberliegenden Seite des HF-Substrats, wodurch eine galvanische Trennung der Koplanarleitung realisiert ist.

Gemäß einer vorteilhafte Ausführungsform der erfindungsgemäßen Lösung wird vorgeschlagen, dass die Breite, die Länge der Koppelbereiche der Leiterstrukturen und/oder die Dicke der Substratlage dahingehend ausgestaltet ist, dass die elektromagnetischen Kopplung des Hochfrequenzsignals über die Koppelbereiche maximal ist und der Wellenwiderstand der Leiterstruktur angepasst ist. Die Änderung der Breite der Leiterstrukturen führt zu einer sprunghaften Änderung des Leitungswellenwiderstandes. Diese Wellenwiderstandssprünge werden für Impedanztransformationen benötigt. Somit ist es über eine Änderung der Breite der Leiterstrukturen und die Anpassung des Kopplungsabstandes der Koppelbereiche möglich, den Wellenwiderstand des Übergangs anzupassen und eine möglichst reflexionsarme Kopplung des Signals zu gewährleisten.

Eine zweckmäßige Ausgestaltung der erfindungsgemäßen Vorrichtung besteht darin, dass es sich bei der Substratlage um ein HF-Substrat handelt und dass das HF-Substrat mit der aufgebrachten Leiterstruktur auf zumindest einer Trägerstruktur angebracht ist. Unter einem HF-Substrat versteht man ein dielektrisches Trägermaterial, das für die Hochfrequenztechnik geeignet ist, da es für die Hochfrequenztechnik wichtige Eigenschaften, wie z.B. geringe Verluste, hohe Stabilität des Dielektrikums, erfüllt Die metallisch leitfähigen Leiterstrukturen sind über ein bekanntes Beschichtungsverfahren, z.B. Aufdampfen von Metall auf ein hochfrequenztaugliches Substratmaterial, aufgebracht worden und über ein bekanntes Strukturierungsverfahren, z.B. Lithographie und Ätzen, strukturiert worden. Die Strukturierung der Leiterstruktur ist bevorzugt so erfolgt, dass die Teilstücke der Leiterstruktur einen möglichst konformen Randbereich aufweisen, da Diskontinuitäten des Materials und in der Form in der Hochfrequenztechnik starke Störungen im Signalverhalten verursachen können. Zur mechanischen Stabilisierung des meist sehr dünnen HF-Substrats, ist dieses zusammen mit den strukturierten Teilstücken der Leiterstruktur auf einem Trägermaterial angebracht. Dieses Trägermaterial kann z.B. eine einfache Epoxydharz-Platine sein, wie sie in der Nederfrequenztechnik eingesetzt wird.

Eine vorteilhafte Ausgestaltung der erfindungsgemäßen Lösung schlägt vor, dass das HF-Substrat aus zumindest einem Material der Materialgruppe der Kunststoffe oder der Keramiken hergestellt ist. Diese Materialgruppen weisen für die Hochfrequenztechnik ideale elektromagnetische Eigenschaften auf und sind chemisch beständig, kostengünstig und einfach herzustellen. Bei den Kunstoffen sind hierbei besonders der teilkristalline Kunststoff Polyetheretherketon (PEEK) und die Gruppe der Fluorkunststoffe, wie z.B. Polytetrafluorethylen (PTFE) bzw. Teflon, Perfluoralkoxy-Copolymer (PFA), und bei den Keramiken die Gruppe der LTCC (Low Temperature Cofired Ceramics) zu nennen. Diese Materialien haben die Vorteile, dass sie in der Hochfrequenztechnik schon seit längerer Zeit etabliert sind und dass sie chemische und physikalische Eigenschaften, wie z.B. chemische Beständigkeit und Temperaturbeständigkeit, aufweisen, die in der Prozessmesstechnik wichtig sind.

Gemäß einer günstigen Ausgestaltung der erfindungsgemäßen Vorrichtung wird angeregt, dass ein Übergang der Hochfrequenzsignale von der Leiterstruktur an eine Koaxialsteckerbuchse abrupt oder stetig ausgestaltet ist und dass zwischen der Leiterstruktur und der Koaxialsteckerbuchse ein elektrischer Kontakt durch einen Klemmvorrichtung, Schweißung und/oder eine Lötung ausgebildet ist. Der Übergang des Signals aus der koplanaren Leiterstruktur erfolgt stetig oder abrupt auf eine standardisierte Koaxialsteckerbuchse oder auf eine andere Bauform des planaren Wellenleiters. Der stetige Übergang wird demgemäß umgesetzt, dass der Innenleiter der Koaxialsteckerbuchse der Geometrie des planaren Wellenleiters stetig angepasst wird. Dadurch kommt es nur zu einem geringen Geometriesprung, der auf den Leitungen geringe Reflexionen verursacht. Der stetige Übergang weist aus den obigen Gründen die größere Bandbreite aber auch die größeren Abmessungen auf. Die elektrische Kontaktierung zumindest dieser zwei Arten des Übergangs von einer Struktur auf eine andere Struktur wird durch eine Klemmvorrichtung, durch eine Schweißung und/oder durch eine Lötung ausgebildet. Die Klemmvorrichtung ist als Feder und/oder Schraube ausgestaltet, die die Anschlusselemente, z.B. die Koaxialsteckerbuchse auf die planaren Wellenleiterstrukturen mit einer definierten Kraft drückt.

Eine vorteilhafte Ausgestaltung der erfindungsgemäßen Lösung ist es, dass ein stufenloser Wellenwiderstandsübergang in einem Übergangsbereich der symmetrischen Koplanarleitung auf eine Mikrostreifenleitung ausgestaltet ist. Dieser Übergangsbereich besitzt eine ortsabhängige Breite der Leiterstruktur, die z.B. konischer Natur ist. Durch die geeignete Wahl der Funktion der ortsabhängigen Breite der Leiterstruktur lässt sich somit ein reflexionsarmer Wellenwiderstandsübergang für große Bandbreiten des Signals erreichen.

Eine sehr vorteilhafte Variante der erfindungsgemäßen Lösung ist darin zu sehen, dass zwischen ausgewählten Teilstücken der Leiterstruktur eine Durchkontaktierung angebracht ist, die einen konduktiven Signalübergang zwischen den ausgewählten Teilstücken der Leiterstruktur bewirkt. Aus schaltungstechnischen Gesichtspunkten ist es notwendig, einen vorhandenen

Kopplungsbereich über eine Durchkontaktierung, z.B. in dem in ein Bohrung eine metallische Hülse bzw. Stift eingesetzt wird und/oder eine Lötbrücke erzeugt wird, eine leitende Verbindung herzustellen. Die Gestaltung der Bereiche der Teilstücke um die Durchkontaktierung und die Durchkontaktierung selbst sind dahingehend ausgestaltet, dass der Wellenwiderstand des zugehörigen Geometriesprungs für einen bestimmten Frequenzbereich abgeglichen ist. Daher kommt es zu keinen beträchtlichen Reflexionen des Signals an der Stelle der Durchkontaktierung.

Eine besonders vorteilhafte Weiterbildung der erfindungsgemäßen Lösung schlägt vor, dass die Vorrichtung in einem Messgerät integriert ist, das über ein Sende- und/oder Empfangseinheit ein Hochfrequenzsignal in ein offenes oder ein geschlossenes Raumsystem abstrahlt und/oder das Hochfrequenzsignal aus dem offenen oder geschlossenen Raumsystem empfängt und das über die Laufzeitmessung des ausgesendeten Hochfrequenzsignals den Füllstand eines Füllguts ermittelt, wobei es sich bei dem Hochfrequenzsignal um ein Mikrowellensignal handelt. Diese Vorrichtung kann beispielsweise in der Prozessmesstechnik für ein Messgerät, mit dem der Füllstand gemessen wird, eingesetzt werden. Bei solchen Messgeräten ist es angebracht, die im Prozessraum (Behälter, Silo) befindlichen Teile des Messgerätes, wie z.B. die Antenne bzw. deren Gehäuse, aus Gründen des Explosionsschutzes auf Erdpotential zu legen, damit es nicht zu einer Zündfunkenentladung an der Antenne kommen kann. Ist das Bezugspotential des Messgerätes verschieden vom Erdpotential, fließt ein störender Ausgleichstrom. Durch eine galvanische Trennung wird dieser Ausgleichsstrom zwischen den Bezugspotentialen unterbunden.

Die Erfindung und ausgewählte Ausführungsbeispiele werden anhand der nach folgenden Zeichnungen näher erläutert. Zur Vereinfachung sind in den Zeichnungen identische Teile mit dem gleichen Bezugszeichen versehen worden. Es zeigt:

Fig.1 : eine schematische Gesamtdarstellung eines auf einem Behälter montierten Messgerätes mit der Vorrichtung zur galvanischen Trennung,

Fig.2 : eine schematische Darstellung der galvanischen Trennung des Signalpfads und der zu jeder Seite symmetrischen angeordneten Bezugspfaden,

Fig.3 : einen Längsschnitt durch eine erste Ausführungsform der galvanischen Trennung mittels einer koplanaren Leitungstechnik,

Fig.4 : einen Längsschnitt durch eine zweite Ausführungsform der galvanischen Trennung mittels einer koplanaren Leitungstechnik,

Fig.5 : eine perspektivische Gesamtansicht der in Fig. 3 gezeigten ersten Ausführungsform, und

Fig.6 : einem vergrößerten Teilausschnitt der perspektivische Gesamtansicht, der in Fig. 5 dargestellten ersten Ausführungsform.

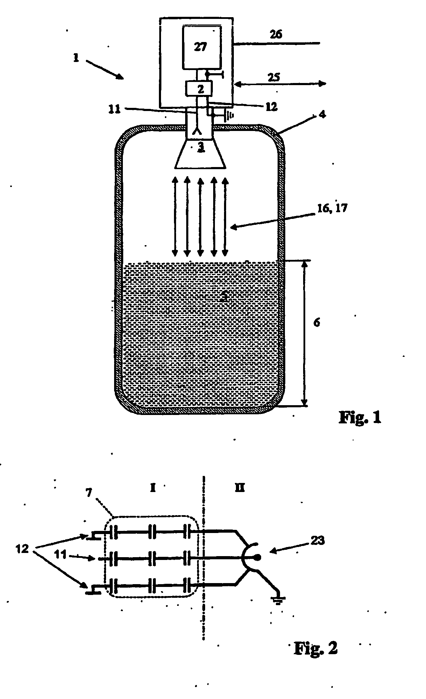

In Fig. 1 wird ein Anwendungsbeispiel der galvanischen Trennung in einem Prozessmesssystem dargestellt. Das Messgerät 1 in der Fig.1, das auf einen Behälter 4 montiert ist, ermittelt beispielsweise nach der Laufzeit-Messmethode den Füllstand 6 eines Füllguts 5 in dem Behälter 4. Das Messgerät 1 beinhaltet eine Sende- und/oder Empfangseinheit 3, über die Mikrowellensignale 17 in den Freiraum abgestrahlt werden, welche an einer Oberfläche im Behälter 4 oder an einer Oberfläche des Füllguts 5 reflektiert werden und nach einer bestimmten Laufzeit wieder von der Sende- und/oder Empfangseinheit 3 empfangen werden. Über die Laufzeit der Mikrowellensignale 17 wird der Füllstand 6 des Füllguts 5 im Behälter 4 bestimmt. Die Regel-/Auswerteeinheit 27 hat die Aufgabe, die Mikrowellensignale 17 zu erzeugen und das empfangene, reflektierte Mikrowellensignal 17 auszuwerten bzw. messtechnisch zu verarbeiten. Diese Sende- und/oder Empfangseinheit 3 ist durch die erfindungsgemäße Vorrichtung 2 von der Regel-/Auswerteeinheit 27, der restlichen Elektronik im Messgerät 1, der Versorgungsleitung 26 und dem Feldbus 25 galvanisch getrennt. Durch die galvanische Trennung und die Erdung der im Prozess befindlichen Elemente entsteht ein "eigensicheres" Messgerät 1, das die Gefahr der Funkenbildung und sogleich die Gefahr durch Erwärmung von elektrischen Leitern, welche die Zündung einer bestimmten explosionsfähigen Atmosphäre verursachen kann, ausschließt.

Bevorzug handelt es sich im gezeigten Fall um ein Zweileitermessgerät, bei dem die Versorgungsleitung 26 und die Feldbusleitung 25 auf einer Leitung zusammen geschaltet sind, so dass nur eine zweiadrige Leitung notwendig ist, um das Messgerät 1 mit Energie zu versorgen und gleichzeitig die Kommunikation mit einer entfernten Leitstelle zu gestatten.

Die Vorrichtung 2 ist sowohl in der freistrahlenden Radarmesstechnik und in der TDR-Messtechnik mit an Wellenleitern geführten Hochfrequenzsignalen 16 einsetzbar. Die TDR-Messtechnik (Time Domain Reflectometry) ist eine alternative Methode, den Füllstand 6 in einem Behälter 4 zu messen, welche nicht explizit in der Fig.1 gezeigt ist. Bei dieser Messmethode werden Hochfrequenzsignale 16 entlang eines Wellenleiters in den Behälter 4 geführt, welche aufgrund einer DK-Wertänderung des Wellenleiters umgebenden Mediums zurück reflektiert werden. Diese DK-Wertänderung des den Wellenleiter umgebenden Mediums wird durch eine Phasengrenze des Füllguts 5 zur Luft im Behälter verursacht. Aus der Zeitdifferenz, der so genannten Laufzeit, der ausgesendeten Hochfrequenzsignale 16 zu den empfangenen, reflektierten Hochfrequenzsignalen 16 am Wellenleiter lässt sich der Füllstand 6 im Behälter 4 ermitteln.

Die Fig. 2 zeigt eine schematische Darstellung einer dreifach ausgeführten galvanischen Trennung des Signalpfads 11 und der beiden Bezugspfade 12. Durch die mehrfache galvanische Trennung wird ein eigensicherer Bereich II von einem nicht eigensicheren Bereich I getrennt. Zur Vereinfachung der Betrachtungsweise der Vorrichtung 2 wurde die mehrfache galvanische Trennung bzw. die elektromagnetische Kopplung 10 über die Koppelbereiche 9 symbolisiert durch drei in Serie geschaltete Kondensatoren dargestellt. Im Hochfrequenzbereich besitzen die überlappenden Koppelbereiche 9 der Teilstücke 8 nicht nur kapazitive sondern auch induktive Eigenschaften bzw. Charaktere, wodurch die elektromagnetische Kopplung 10 durch ein kompliziertes Ersatzschaltbild mit mehreren Kapazitäten und mehreren Induktivitäten aufgestellt werden muss.

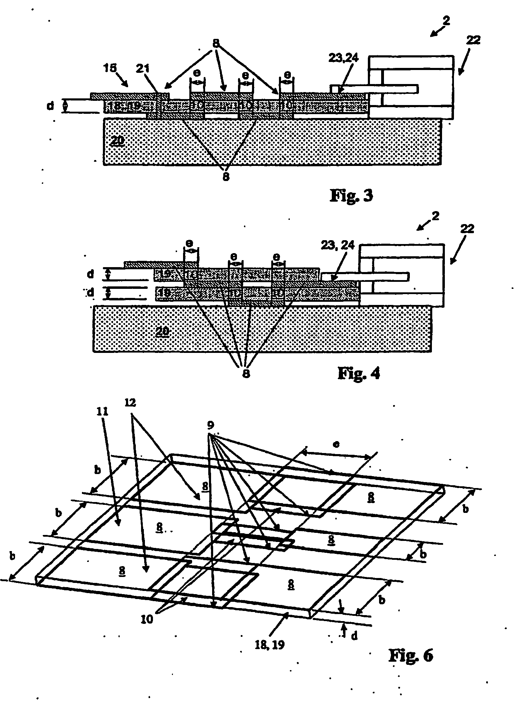

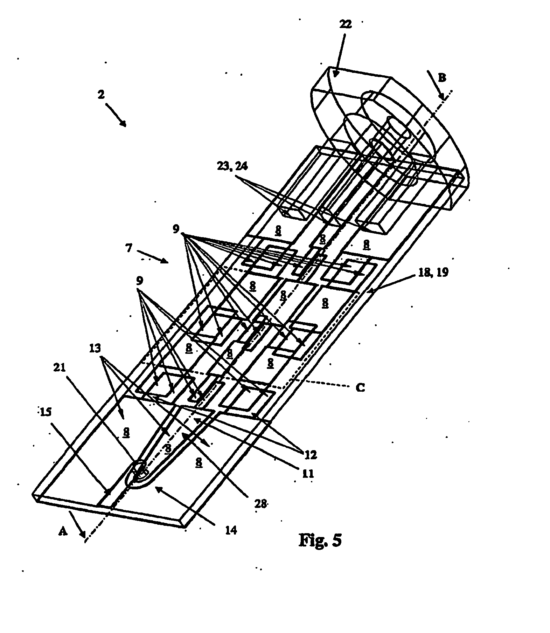

Fig.3 zeigt einen Längsschnitt gemäß der Kennzeichnung A-B in Fig. 5 entlang des Signalpfades 11 mit einer zusätzlichen Trägerstruktur 20. Die galvanische Trennung erfolgt in diesem Ausführungsbeispiel über mehrere Teilstücke 8, die abwechselnd bzw. alternierend auf den beiden Seiten des HF-Substrates angebracht sind und sich mit jeweils einem Koppelbereich 9 räumlich überlappen. Die Länge e des Koppelbereiches 9 liegt bei näherungsweise 1ₘ/4, da es bei dieser Länge e des Koppelbereiches 9 im Idealfall zu keinen Reflexionen des Hochfrequenzsignals 16 am Ende der Teilstücke kommt. Die Dicke d des HF-Substrates 19 ist auf Grund einer optimierten elektromagnetischen Kopplung 10 von Hochfrequenzsignalen 16 in den Koppelbereichen 9 der Teilstücke 8 mit einer Frequenz höher als 6 GHz auf kleiner 1ₘ/4 festgelegt, was in diesem Ausführungsbeispiel einem HF-Substrat 19 aus z.B. Teflon mit einer Dicke d von ca. 250 µm entspricht.

Der elektrische Übergang 24 von einem planaren Teilstück 8 auf ein Anschlusselement einer Koaxialsteckerbuchse 22 erfolgt über eine Lötung, Verklemmung oder Verschweißung der beiden Strukturen. Dieser Übergang 24 kann abrupt erfolgen, wodurch ein Geometriesprung in der Leitungsstruktur 7 entsteht, der auf der Leitungsstruktur 7 Reflexionen verursacht bzw. den Wellenwiderstand der Leitungsstruktur 7 verändert. Diese nachteiligen Störeffekte können vermieden werden, wenn das Teilstück 8 der Leiterstruktur 7 oder z.B. der Innenleiter der Koaxialsteckerbuchse 22 selbst einen stetigen Übergang 24 der Struktur aufweist, wodurch reflexionsarme Wellenwiderstandübergänge mit großen Bandbreiten erreicht werden. Bevorzugt ist im gezeigten Fall der gesamte Aufbau der Leiterstruktur 7 zusammen mit der restlichen HF-Elektronik 27 auf dem gleichen HF-Substrat 19 ausgestaltet. Unter der restlichen HF-Elektronik 27 wird der Teil der Regel- und/oder Auswerteeinheit verstanden, der die Hochfrequenzsignale 16 bzw. die Mikrowellensignale 17 erzeugt und/oder messtechnisch verarbeitet. Dieses HF-Substrat 19 inklusive der Leiterstruktur 7, der Koaxialsteckerbuchse 22 und der restliche HF-Elektronik 27 ist auf eine Trägerstruktur 20 aufgebracht. Die Vorrichtung 2 und die HF-Elektronik 27 werden beispielsweise zusammen auf eine NF-Platine aufgeklebt, da beispielsweise eine ca. 250 µm dicke Platte aus Teflon nicht mechanisch stabil ist. Wird hingegen eine Keramik, z.B. LTCC, als Material für ein HF-Substrat 19 verwendet, so kann auf eine zusätzliche Trägerstruktur 20 verzichtet werden, da diese Substratlage 18 alleine eine gute mechanische Stabilität aufweist.

Dieses Ausführungsbeispiel einer mehrfachen galvanischen Trennung lässt sich sehr einfach herstellen, da der Aufbau dieser koplanaren Leiterstruktur 7 auf dem HF-Substrat zusammen mit der HF-Elektronik 27 ausgestaltet wird. Die Herstellung der Leiterstruktur 7 kann deshalb zusammen mit dem standardisierten Herstellungsprozess der übrigen Leitungselemente der HF-Elektronik bzw. Regel-/Auswerteeinheit 27 durchgeführt werden. Allein durch den Strukturierungsprozess der Leiterstrukturen 7 und die Anfertigung der Durchkontaktierung 21 ist die galvanische Trennung einfach umsetzbar, was zu einer großen Kostenreduktion führt, da keine zusätzlichen Bauelemente und Herstellungsprozesse zur Umsetzung der galvanischen Trennung verwendet werden. Ein Vorteil dieser Ausführungsform einer galvanischen Trennung durch die Leiterstruktur 7 ist, dass dieser Aufbau eine breitbandige Bandpasscharakteristik aufweist. Es werden durch die symmetrische Koplanarleitung 13 breitbandige Bandpassübertragungen von über 15% der Mittenfrequenz bzw. Mittenwellenlänge lₘ erreicht. Außerdem weist die Koplanarleitung 13 im Gegensatz zu anderen planaren Wellenleitern, wie z.B. Mikrosteifenleitungen 15, eine viel kleinere Dispersion auf, d.h. die Ausbreitungsgeschwindigkeit von elektromagnetischen Wellen in einem Medium ist nur geringfügig von der Wellenlänge bzw. von der Frequenz abhängig. Dies ist sehr vorteilhaft, da Dispersion zu Laufzeitunterschieden der Hochfrequenzsignale 16 auf den planaren Wellenleitern in Abhängigkeit von der Frequenz führen, wodurch ein Laufzeitmessung mit einem breitbandigen Mikrowellenimpuls unmöglich wäre, da das empfangen Messsignal auf Grund unterschiedlicher Ausbreitungsgeschwindigkeiten der Anteile des Mikrowellenimpulses nicht mehr eindeutig einer Zeit oder einer Wegstrecke zugeordnet werden kann.

In Fig. 4 ist eine zweite Ausführungsform der galvanischen Trennung in einer Längsschnittansicht aufgezeigt. In dieser Ausführungsform wird auf eine Durchkontaktierung 21 über das HF-Substrat 19 verzichtet, jedoch ist hierbei eine mehrschichtiger Aufbau der Substratlagen 18 nötig, der die Herstellung der Leiterstrukturen 7 aufwändiger macht. Ein weiterer Vorteil ist, dass der Platz, der für die mehrfache elektromagnetische Kopplung 10 benötigt wird, bei einer Mehrschichtigen Ausführung des HF-Substrats 19 geringer ist. Selbstverständlich lassen sich noch eine Vielzahl von weiteren Ausführungsformen mit einer oder mehreren Substratlagen berücksichtigen.

In Fig.5 ist eine perspektivische Ansicht der ersten Ausführungsform zu sehen, die eine galvanische Trennung zwischen einem eigensicheren Bereich und einem nicht eigensicheren Gerät ermöglicht.

Der Aufbau wird anhand des Signalverlaufs des eingespeisten Hochfrequenzsignals 16 bzw. Mikrowellensignals 17 erklärt. Das Hochfrequenzsignal 16 bzw. Mikrowellensignal 17 wird von einer HF-Elektronik bzw. Regel/-Auswerteeinheit 27, die beispielsweise in einer Mikrostreifenleitungstechnik 15 umgesetzt wurde, über eine Durchkontaktierung 21 des Signalpfades 12 in eine symmetrische Koplanarleitung 13 überführt. Um diesen abrupten von Reflexionen behafteten Übergangsbereich 14 des Hochfrequenzsignals 16 durch einen Geometriesprung der planaren Wellenleitungen an der Stelle der Durchkontaktierung 21 zu entschärfen, wurde ein stufenloser Wellenwiderstandsübergang bzw. ein Taper 28 im Signalpfad 11 der Koplanarleitung 13 ausgebildet, der eine reflexionsarmen Wellenwiderstandsübergang des Hochfrequenzsignals 16 mit großer Bandbreite ermöglicht. Der Signalpfad 11 und die beiden Bezugspfade 12 liegen parallel nebeneinander auf der Unterseite des HF-Substrats 19 und erzeugen eine Koplanarleitung 13. Auf der Oberseite des HF-Substrats 19 sind dementsprechend weitere Teilstücke 8 angebracht, so dass die Teilstücke 8 der Leitungsstruktur 7 auf den verschiedenen Seiten des HF-Substrats 19 räumlich getrennte Koppelbereiche ausbilden. Über diese Koppelbereiche, die sich in einer Länge e von 1ₘ /4 überlappen, werden die Hochfrequenzsignale 16 elektromagnetisch in das jeweils gegenüberliegende Teilstück 8 eingekoppelt. Die Länge e der Koppelbereiche 9 ist auf näherungsweise 1ₘ/4 festgelegt, da das elektromagnetische Feld nicht abrupt mit einem Teilstück 8 der Leiterstruktur 7 endet und durch eine 1ₘ/4-Transformation des Leerlaufes des offenen Ende der Teilstücke 8 der Leiterstruktur 7 ein elektromagnetischer Kurzschluss zwischen den beiden überlappenden Koppelbereichen 9 entsteht. Die Breite b der Koppelbereiche 9 ist in der Art und Weise ausgestaltet, dass es durch die abrupte Änderung der Breite b der Teilstücke 8 im Bereich des Koppelbereiches 9 zu einem Wellenwiderstandsprung kommt. Solche Wellenwiderstandssprünge werden als Impedanztransformationen benötigt, um die Impedanz der Teilstücke 8 an die Impedanz der elektromagnetischen Kopplung 10 über das dielektrische Material des HF-Substrats 19 anzupassen. Diese elektromagnetischen Kopplungen 10 sind mehrfach ausgeführt, z.B. in dem ersten und zweiten Ausführungsbeispiel dreimal. An den letzten Teilstücken 8 der symmetrischen Koplanarleitung 14 ist ein abrupter elektrischer Übergang 24 auf eine Koaxialsteckerbuchse 22 aufgezeigt. Dieser elektrische Kontakt 23 der Anschlüsse der Koaxialsteckerbuchse 22 kann über eine Vielzahl von verschiedenen Verfahren erfolgen, die alle Ihre Nachteile und Vorteile haben. Beispielsweise ist eine Lötung, Klemmvorrichtung oder Schweißung, die die planare Wellenleiterstruktur mit den Anschlüssen der Koaxialsteckerbuchse 22 verbindet, ausführbar. Aus Gründen der Wellenwiderstandsanpassung kann der abrupte reflexionsbehaftete Übergang 24 der Wellenleiterstrukturen demgemäß durch einen stetigen reflexionsarmen Übergang 24 der Teilstücke 8 oder der Anschlüsse der Koaxialsteckerbuchse 22 ausgeführt sein.

In Fig. 6 ist der in Fig. 5 mit C gekennzeichnete Ausschnitt gezeigt, der die Koppelbereiche 9 der Teilstücke 8 der Leiterstruktur 7 vergrößert darstellt. In dieser Darstellung sind die Koppelbereiche 9 der Teilstücke 8 der Leiterstruktur 7 deutlich dargestellt. In der Darstellung sind die Änderungen der Breiten b der Teilstücke 8 in den Koppelbereichen 9 zu sehen. Diese Geometriesprünge durch die Änderungen der Breite b der Teilstücke 8 bilden hochfrequenztechnisch gesehen Wellenwiderstandssprünge, die als Impedanztransformationen genutzt werden. Durch die Impedanztransformationen wird die Impedanz der Teilstücke 8 an die Impedanz der elektromagnetischen Kopplung 10 über das dielektrische Material des HF-Substrats 19 angepasst.

## Patentansprüche

1. Vorrichtung (2) zur Übertragung von breitbandigen Hochfrequenzsignalen (16) einer Mittenwellenlänge (λₘ) mit einer Leiterstruktur (7), die zumindest einen Signalpfad (11) und zwei symmetrisch zum Signalpfad (11) angeordnete Bezugspfade (12), die zusammen eine Koplanarleitung (13) bilden, aufweist, wobei die Leiterstruktur (7) in einzelne Teilstücke (8) aufgeteilt ist, wobei die Teilstücke (8) der Leiterstruktur (7) auf zwei gegenüberliegenden Selten von zumindest einer dielektrische Substratlage (18) einer vorgegebenen Dicke (d) derart angeordnet sind , dass die Teilstücke (8) der Leiterstruktur (7) in vorgegebenen Koppelbreichen (9) durch eine Substratlage (18) räumlich getrennt überlappen, wodurch eine galvanische Trennung der Koplanarleitung (13) realisiert ist, indem die Koppelbereiche (9) der Leiterstruktur (7) die Hochfrequenzsignale (16) durch eine elektromagnetische Kopplung (10) übertragen,
**dadurch gekennzeichnet,**
**dass** die Dicke (d) der Substratlage (18) kleiner ist als ein Viertel der Mittenwellenlänge (λₘ/4),
**dass** die Teilstücke (8) der Leiterstruktur (7) auf den beiden Seiten der Substratlage (18), die als ein HF-Substrat (19) ausgebildet ist, alternierend angebracht sind,
**dass** zumindest drei seriell hintereinander angeordnete Koppelbereiche (9) in dem Signalpfad (11) und in den beiden Bezugspfaden (12) der Leiterstruktur (7) als eine mehrfache galvanische Trennung der Koplanarleitung (13) ausgestaltet sind,
**dass** die Länge (e) der Koppelbereiche (9) der Teilstücke (8) der Leiterstrukturen (7) auf näherungsweise einem Viertel der Mittenwellenlänge (λₘ/4) zur Vermeidung von Reflexionen des Hochfrequenzsignals (16) am Ende der Teilstücke (8) ausgestaltet ist, und
**dass** durch eine abrupte Änderung in der Breite (b) im Bereich der Koppelbereiche (9) der Leiterstruktur (7) eine Impedanzanpassung der elektromagnetischen Kopplung (10) über das HF-Substrat (19) ausgestaltet ist.

2. Vorrichtung nach Anspruch 1
**dadurch gekennzeichnet,**
und dass das HF-Substrat (19) mit der aufgebrachten Leiterstruktur (7) auf zumindest einer Trägerstruktur (20) angebracht ist.

3. Vorrichtung nach Anspruch 2,
**dadurch gekennzeichnet,**
**dass** das HF-Substrat (19) aus zumindest einem Material der Materialgruppe der Kunststoffe oder der Keramiken ausgestaltet ist.

4. Vorrichtung nach Anspruch 1,
**dadurch gekennzeichnet,**
**dass** ein Übergang (24) der Hochfrequenzsignale (16) von der Leiterstruktur (7) an eine Koaxialsteckerbuchse (22) abrupt oder stetig ausgestaltet ist und dass zwischen der Leiterstruktur (7) und der Koaxialsteckerbuchse (22) ein elektrischer Kontakt (23) durch einen Klemmvorrichtung, Schweißung und/oder eine Lötung ausgebildet ist.

5. Vorrichtung nach Anspruch 1,
**dadurch gekennzeichnet,**
**dass** ein stufenloser Wellenwiderstandsübergang (28) in einem Übergangsbereich (14) der symmetrischen Koplanarleitung (13) auf eine Mikrostreifenleitung (15) ausgestaltet ist.

6. Vorrichtung nach Anspruch 1,
**dadurch gekennzeichnet,**
**dass** zwischen ausgewählten Teilstücken (8) der Leiterstruktur (7) eine Durchkontaktierung (21) angebracht ist, die einen konduktiven Signalübergang zwischen den ausgewählten Teilstücken (8) der Leiterstruktur (7) bewirkt.

7. Vorrichtung nach einem der vorhergehenden Ansprüchen,
**dadurch gekennzeichnet,**
**dass** die Vorrichtung (2) in einem Messgerät (1) integriert ist, das über eine Sende- und/oder Empfangseinheit (3) die Hochfrequenzsignale (16) in ein offenes oder ein geschlossenes Raumsystem (4) abstrahlt und/oder die Hochfrequenzsignale (16) aus dem offenen oder geschlossenen Raumsystem (4) empfängt und das über die Laufzeitmessung der ausgesendeten Hochfrequenzsignale (16) den Füllstand (6) eines Füllguts (5) ermittelt, wobei es sich bei den Hochfrequenzsignale (16) um Mikrowellensignale (17) handelt.

## Claims

1. Unit (2) for transmitting broadband high-frequency signals (16) of a medium waveband (λₘ) with a conductor structure (7) that exhibits at least one signal path (11) and two reference paths (12), arranged symmetrically in relation to the signal path (11), and together form a coplanar line (13). The conductor structure (7) is split into individual subsections (8), where the subsections (8) of the conductor structure (7) are arranged on two opposite sides of at least one dielectric substrate layer (18) of a predefined thickness (d) in such a way that the subsections (8) of the conductor structure (7) overlap - in a spatially separated manner - in predetermined coupling areas (9), whereby the coplanar line (13) is galvanically isolated by the coupling areas (9) of the conductor structure (7) transmitting the high-frequency signals (16) through an electromagnetic coupling (10),
**characterized in that**:
the thickness (d) of the substrate layer (18) is less than a quarter of the medium wavelength (λₘ /4);
the subsections (8) of the conductor structure (7) are alternately arranged on both sides of the substrate layer (18) that is formed as an HF substrate (19);
at least three coupling areas (9) arranged in series one after another in the signal path (11) and in the two reference paths (12) of the conductor structure (7) provide multiple galvanic isolation of the coplanar line (13);
the length (e) of the coupling areas (9) of the subsections (8) of the conductor structures (7) is approximately one quarter of the medium wavelength (λₘ/4) to avoid any reflection of the high-frequency signal (16) at the end of the subsections (8);
an abrupt change in the width (b) in the areas of the coupling areas (9) of the conductor structure (7) causes impedance adjustment of the electromagnetic coupling (10) via the HF substrate (19).

2. Unit as per Claim 1,
**characterized in that** the HF substrate (19) is arranged on at least one carrier structure (20) with the conductor structure (7).

3. Unit as per Claim 2,
**characterized in that** the HF substrate (19) is made from at least one material in the plastics or ceramics material group.

4. Unit as per Claim 1,
**characterized in that** a transition (24) of the high-frequency signals (16) from the conductor structure (7) to a coaxial connector socket (22) is implemented as abrupt or constant, and **in that** an electrical contact (23) is formed between the conductor structure (7) and the coaxial connector socket (22) via a clamping unit, or via welding and/or soldering.

5. Unit as per Claim 1,
**characterized in that** a continuous characteristic impedance transition (28) is provided in one transition area (14) of the symmetrical coplanar line (13) to a microstrip line (15).

6. Unit as per Claim 1,
**characterized in that** a through connection (21) is provided between selected subsections (8) of the conductor structure (7) that causes conductor signal transmission between the selected subsections (8) of the conductor structure (7).

7. Unit as per one of the previous claims, **characterized in that** the unit (2) is integrated in a measuring device (1) that emits the high-frequency signals (16) to an open or closed spatial system (4) via a transmitter and/or receiver unit (3), and/or receives the high-frequency signals (16) from the open or closed spatial system (4), and determines the level (6) of a product (5) by measuring the time-of-flight of the high-frequency signals (16) emitted, where the high-frequency signals (16) are microwave signals (17).

## Revendications

1. Dispositif (2) destiné à la transmission de signaux haute fréquence à large bande (16) d'une longueur d'onde centrale (λₘ) avec une structure de conducteurs (7), qui présente au minimum une piste de signal (11) et deux pistes de référence (12) disposées de façon symétrique par rapport à la piste de signal (11), qui forment ensemble un conducteur coplanaire (13), la structure de conducteurs (7) étant divisée en différents éléments (8), les éléments (8) de la structure de conducteurs (7) étant disposés sur deux côtés opposés d'au moins une couche de substrat diélectrique (8) d'une épaisseur (d) prédéfinie, de telle manière que les éléments (8) de la structure de conducteurs (7) se chevauchent, de façon séparée dans l'espace, dans des zones de couplage (9) prédéfinies à travers une couche de substrat (18), ce par quoi est réalisée une séparation galvanique du conducteur coplanaire (13), en ce que les zones de couplage (9) de la structure de conducteurs (7) transmettent les signaux haute fréquence (16) par le biais d'un couplage électromagnétique (10),
**caractérisé en ce**
**que** l'épaisseur (d) de la couche de substrat (18) est inférieure à un quart de la longueur d'onde centrale (λₘ/4),
**que** les éléments (8) de la structure de conducteurs (7) sont disposés de façon alternée des deux côtés de la couche de substrat (18), qui est constituée en tant que substrat HF (19),
**qu'**au moins trois zones de couplage (9) disposées en série les unes derrière les autres sont prévues, dans la piste de signal (11) et dans les deux pistes de référence (12) de la structure de conducteurs (7), en tant que séparation galvanique du conducteur coplanaire (13),
**que** la longueur (e) des zones de couplage (9) des éléments (8) relatifs aux structures de conducteurs (7) équivaut approximativement à un quart de la longueur d'onde centrale (λₘ/4) en vue de la prévention de réflexions du signal haute fréquence (16) à l'extrémité des éléments (8), et
**qu'**une adaptation d'impédance du couplage électromagnétique (10) est réalisée à travers le substrat HF (19), grâce à un changement brusque de la largeur (b) au niveau des zones de couplage (9) de la structure de conducteurs (7).

2. Dispositif selon la revendication 1,
**caractérisé en ce**
**que** le substrat HF (19) est appliqué sur au moins une structure support (20) avec la structure de conducteurs (7) mise en oeuvre.

3. Dispositif selon la revendication 2,
**caractérisé en ce**
**que** le substrat HF (19) se compose d'au moins une matière issue du groupe de matières des plastiques ou des céramiques.

4. Dispositif selon la revendication 1,
**caractérisé en ce**
**qu'**une transition (24) des signaux haute fréquence (16) de la structure de conducteurs (7) vers une prise femelle coaxiale (22) est réalisée de façon brusque ou constante, et en ce qu'un contact électrique (23) entre la structure de conducteurs (7) et la prise femelle coaxiale (22) est établi au moyen d'un dispositif de serrage, d'une soudure et/ou d'une brasure.

5. Dispositif selon la revendication 1,
**caractérisé en ce**
**qu'**une transition continue de l'impédance caractéristique (28) est réalisée dans une zone de transition (14) du conducteur coplanaire symétrique (13) sur un conducteur à microruban (15).

6. Dispositif selon la revendication 1,
**caractérisé en ce**
**qu'**entre les éléments (8) sélectionnés de la structure de conducteurs (7) est réalisé un contact traversant (21), qui génère une transition conductive du signal entre les éléments (8) sélectionnés de la structure de conducteurs (7).

7. Dispositif selon l'une des revendications précédentes,
**caractérisé en ce**
**que** le dispositif (2) est intégré dans un appareil de mesure (1), qui diffuse les signaux haute fréquence (16) dans un système spatial (4) ouvert ou fermé par l'intermédiaire d'une unité d'émission et/ou de réception (3), et/ou reçoit les signaux haute fréquence (16) issus du système spatial (4) ouvert ou fermé et détermine le niveau (6) d'un produit (5) en mesurant le temps de propagation des signaux haute fréquence (16) émis, les signaux haute fréquence (16) étant des signaux hyperfréquence (17).
